(19) Europäisches Patentamt
European Patent Office
Office européen des brevets

(11) Veröffentlichungsnummer: **0 091 628**
**A2**

(12) # EUROPÄISCHE PATENTANMELDUNG

(21) Anmeldenummer: 83103268.5

(51) Int. Cl.$^3$: C 07 F 9/20

(22) Anmeldetag: 02.04.83

(30) Priorität: 10.04.82 DE 3213367

(43) Veröffentlichungstag der Anmeldung: 19.10.83 Patentblatt 83/42

(84) Benannte Vertragsstaaten: CH DE FR GB IT LI

(71) Anmelder: HOECHST AKTIENGESELLSCHAFT
Postfach 80 03 20
D-6230 Frankfurt am Main 80(DE)

(72) Erfinder: Stähler, Gerhard, Dr.
Loreleistrasse 87
D-6230 Frankfurt am Main 80(DE)

(54) **Verfahren zur Herstellung von Thiophosphorsäure-ester-chloriden.**

(57) Gegenstand der vorliegenden Erfindung ist ein Verfahren zur Herstellung von Verbindungen der Formel I, worin

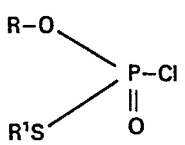

(I)

R und $R^1$ ggf. substituiertes ($C_1$-$C_8$)-Alkyl, ($C_2$-$C_8$)-Alkenyl oder ($C_5$-$C_6$)-Cycloalkyl bedeuten, bei welchem Thiophosphorsäure-0,0,S-triester mit Phosphortrichlorid und Chlor umgesetzt werden.

EP 0 091 628 A2

Croydon Printing Company Ltd.

## Verfahren zur Herstellung von Thiophosphorsäure-esterchloriden

Gegenstand vorliegender Erfindung ist ein neues Verfahren zur Herstellung von Thiophosphorsäureesterchloriden der Formel I, worin

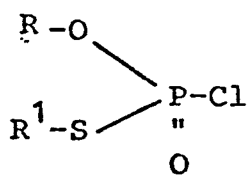

(I)

R und $R^1$ gleiche oder verschiedene Bedeutung besitzen und $(C_1-C_8)$-Alkyl, das ggf. durch $(C_1-C_2)$-Alkoxy oder $(C_1-C_2)$-Alkylthio substituiert ist, $(C_2-C_8)$-Alkenyl oder $(C_5-C_6)$-Cycloalkyl, darunter bevorzugt $(C_1-C_6)$-Alkyl, bedeuten, das dadurch gekennzeichnet ist, daß man Verbindungen der Formel II, worin R und $R^1$ die

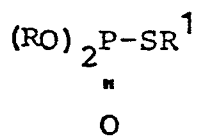

(II)

obengenannten Bedeutungen besitzen, mit Phosphortrichlorid und Chlor umsetzt.

Besonders bevorzugte Reste für R und $R^1$ sind $(C_1-C_4)$-Alkyl und $(C_2-C_4)$-Alkenyl.

Dieses Verfahren weist überraschende Vorteile gegenüber den bereits bekannten Syntheseverfahren zur Herstellung von Thiophosphorsäureesterchloriden der Formel II auf.

Bei einem der literaturbekannten Verfahren werden S-Alkylthiophosphoryl-chloride in Gegenwart von Basen mit stöchiometrischen Mengen von Alkoholen umgesetzt. Die Base bindet hierbei freiwerdende Salzsäure in Form ihres Hydrochlorids.

Bei diesem Verfahren werden organische Basen wie Triethylamin eingesetzt, welche nur nach aufwendigen Methoden wiedergewonnen werden können. Außerdem können Spuren ihrer Hydrochloride sowohl die destillative Reinigung wie auch die Lagerstabilität der Endprodukte stark beeinträchtigen. Aufwendige chromatographische Reinigungsverfahren der anfallenden Phosphorsäureesterchloride sind daher in der Regel erforderlich.

Die bei diesem Literaturverfahren als Ausgangsprodukte zu verwendeten S-Alkylthiophosphorylchloride werden entweder durch Umsetzung von Phosphoroxychlorid mit Mercaptanen unter Zusatz von organischen Basen hergestellt [s. Kobayashi et al. Botyu-Kagaku 34 165 (1969)], wobei die gleichen Schwierigkeiten der Aufarbeitung, wie oben beschrieben auftreten, oder durch Umsetzung von Phosphortrichlorid mit Alkenylsulfenylchloriden in Gegenwart von Carbonsäuren erhalten (s. DE-OS 26 35 931), wobei die in situ umzusetzenden Alkylsulfenylchloride bei niedriger Temperatur durch Chlorieren von Mercaptanen oder Dialkyldisulfiden hergestellt werden.

In beiden Fällen werden als Ausgangsmaterial Mercaptane verwendet, deren Giftigkeit und übler Geruch aufwendige Umweltschutzmaßnahmen erfordern.

Weiterhin lassen sich Thiophosphorylchloride durch Umsetzung von Phosphorigsäuremonoesterdichloriden mit Alkylsulfenylchloriden in Gegenwart von Carbonsäuren (s. DE-OS 25 52 945) oder durch Umsetzung von Phosphorigsäurediestermonochloriden mit Alkylsulfenylchloriden [(s. Lipmann, J. org. Chem. 30, 3217, 3218 (1965); Jap. Offenlegungsschrift Nr. 55 139-394; NL-OS

7209926) herstellen.

In beiden Fällen sind Mercaptane mit den oben erwähnten Nachteilen als Ausgangsprodukte erforderlich. Zudem sind Phosphorigsäureesterchloride nur schwer rein erhältlich und rein nur kurze Zeit haltbar.

An anderer Stelle wird die Herstellung von O,S-Dialkylthiophosphorylchloriden durch Umsetzung von (Poly)-alkylammoniumsalzen von O,S-Dialkylthiophosphorsäuren mit Halogenierungsmitteln wie Phosgen (DE-OS 28 04 775) beschrieben. Ein Nachteil dieses Verfahrens ist darin zu sehen, daß große Mengen an Ammoniumsalzen als Nebenprodukte anfallen. Zudem ist dieses Syntheseverfahren deshalb sehr aufwendig, da die als Ausgangsmaterial benötigten Ammoniumsalze von O,S-Dialkylthiophosphorsäuren erst durch Umsetzung von O,O,S-Trialkylphosphorsäureestern mit (Poly)-alkylaminen hergestellt werden müssen. O,O,S-Trialkylthiophosphorsäureester werden beim erfindungsgemäßen Verfahren direkt in die Synthese eingesetzt.

Eigene Versuche zur Spaltung von Thiophosphorsäureestern der Formel II mit Halogenierungsmitteln wie Phosgen oder Phosphorpentachlorid, die als Spaltungsagentien von Phosphonsäurealkylestern zu Phosphonsäurechloriden beschrieben sind, führten entweder bei Verwendung von Phosgen zu kaum nachweisbaren oder bei Verwendung von Phosphorpentachlorid zu nur geringen Mengen (unter 20 % Ausbeute) an gewünschten Produkten der Formel I neben großen Mengen unbrauchbarer Nebenprodukte.

Es war daher überraschend, daß man gute bis sehr gute Ausbeuten an Verbindungen der Formel I erhält, wenn man

Thiophosphorsäureester der Formel II mit Phosphortrichlorid und Chlor behandelt.

Die Reaktionsprodukte der Formel I lassen sich problemlos durch Vakuumdestillation reinigen.

Die Umsetzung kann ohne Lösungsmittel erfolgen, wird aber zur besseren Abführung der Reaktionswärme vorteilhafterweise in Lösungsmitteln durchgeführt. Als solche sind alle in Bezug auf die Reaktanten wie auf die Reaktionsprodukte inerten Flüssigkeiten geeignet. Hierzu zählen insbesondere halogenierte Aliphaten, wie beispielsweise Methylenchlorid, Chloroform, Tetrachlorkohlenstoff, daneben aber auch Nitrile, wie Acetonitril, Äther wie Diethylether, Dioxan oder gegebenenfalls substituierte Aromaten wie Benzol, Toluol, Xylol oder Chlorbenzol, soweit ihr Siedepunkt die destillative Abtrennung der Reaktionsprodukte erlaubt.

Auch überschüssiger Ausgangsester oder die Reaktionsprodukte wie Thiophosphorylchloride und Phosphoroxychlorid sind, wenn auch ohne Vorteil, als Reaktionsmedium verwendbar.

Im allgemeinen werden die Reaktionsteilnehmer in stöchiometrischen Mengen eingesetzt. Phosphortrichlorid und O,O,S-Trialkylthiophosphorsäureester können auch im Überschuß eingesetzt werden.

Die Umsetzungen können zwischen -20°C und dem Siedepunkt des Lösungsmittels vorzugsweise zwischen +10°C und 80°C durchgeführt werden. Gegen Ende der Reaktion empfiehlt es sich, das Reaktionsgemisch bis zum Siedepunkt des Lösemittels zu erhitzen, wobei ggf. anfallendes Alkylhalogenid als Begleitprodukt destillativ entfernt wird.

Die als Ausgangsverbindungen einzusetzenden Verbindungen der Formel II lassen sich gemäß bekannten Verfahrensweisen, vorteilhaft durch Umsetzung von entsprechenden Alkali- oder Ammoniumsalzen von Thiolophosphorsäureestern mit Alkylierungsagenzien wie Dialkylsulfaten, Alkylsulfonaten oder Alkylhalogeniden bzw. mit entsprechenden Alkenyl- oder Cycloalkylhalogeniden herstellen (s. Pesin, Chem. Abstr. 56 14 046; Pistschimuka, Ber. Chem. Ges. 41 3854 (1908); Kabachnik, Chem. Abstr. 50, 3850; Stirling, J. Chem. Soc. 1957, 3597).

Verbindungen der Formel (I), insbesondere O-Ethyl-S-n-propylthiophosphorylchlorid, sind wertvolle Zwischenprodukte zur Herstellung von Pflanzenschutzmitteln (DE-OS 3 035 650, Belg. Pat. 798 937.)
Nachstehende Beispiele sollen das neue Herstellungsverfahren erläutern:

Beispiel 1

O-Ethyl-S-n-propyl-thiophosphorylchlorid

In eine Lösung von 212 g O,O-Diethyl-S-n-propyl-thiophosphorsäureester und 138 g Phosphortrichlorid in 500 ml Tetrachlorkohlenstoff werden unter Rühren 71 g Chlor eingeleitet. Die Reaktionstemperatur wird hierbei durch Kühlung unter 40°C gehalten.

Nach einstündigem Nachrühren bei 30 - 40°C wird das Reaktionsgemisch so lange zum Sieden erhitzt, bis die Entwicklung von Ethylchlorid beendet ist. Das Lösungsmittel sowie entstandenes Phosphoroxychlorid werden bei einer Temperatur unterhalb 70°C im Vakuum abdestilliert. Zurück bleiben 200 g Öl, aus welchem bei Kp. 0.4: 69 - 70°C 175 g der Titelverbindung erhalten werden.

Beispiel 2

O-Ethyl-S-n-butyl-thiophosphorylchlorid

385 g O,O-Diethyl-S-n-butyl-thiophosphorsäureester werden in einem Liter Tetrachlorkohlenstoff mit 234 g Phosphortrichlorid und 120 g Chlor, wie in Beispiel 1 beschrieben, umgesetzt. Die in Beispiel 1 beschriebene

Aufarbeitung liefert 305 g O-Ethyl-S-n-butyl-thiophosphorylchlorid vom $Kp._{0,4}$ 84 - 85 °C.

Beispiele 3 - 9

Analog der in Beispiel 1 beschriebenen Verfahrensweise werden die in nachfolgender Tabelle zusammengefaßten Thiophosphorylchloride der Formel I hergestellt:

Tabelle

| Vbg. gem. Bsp.Nr. | R | $R^1$ | Kp. d. Verfahrensprodukte | |
|---|---|---|---|---|
| 3 | $CH_3$ | $CH_3$ | $Kp_{1,0}$ | 51 - 55°C |
| 4 | $CH_3$ | $C_2H_5$ | $Kp_{0,2}$ | 57 - 58°C |
| 5 | $C_2H_5$ | $C_2H_5$ | $Kp_{0,8}$ | 64 - 65°C |
| 6 | $C_2H_5$ | $C_2H_5$ | $Kp_{1,0}$ | 74 - 75°C |
| 7 | $C_2H_5$ | $i\text{-}C_3H_7$ | $Kp_{1,2}$ | 77 - 78°C |
| 8 | $C_2H_5$ | $i\text{-}C_4H_9$ | $Kp_{0,5}$ | 80 - 82°C |
| 9 | $C_2H_5$ | sec. $-C_4H_9$ | $Kp_{1,0}$ | 85 - 86°C |
| 10 | $C_2H_5$ | $CH_2\text{-}CH\text{=}CH_2$ | $Kp_{1,0}$ | 92 - 94° |

Patentansprüche:

1. Verfahren zur Herstellung von Verbindungen der Formel I, worin

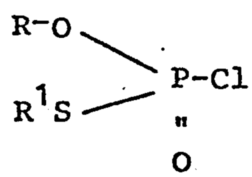

(I)

R und $R^1$ = gleiche oder verschiedene Bedeutungen und $(C_1-C_8)$-Alkyl, das ggf. durch $(C_1-C_2)$-Alkoxy oder $(C_1-C_2)$-Alkylthio substituiert ist, $(C_2-C_8)$-Alkenyl oder $(C_5-C_6)$-Cycloalkyl bedeuten, dadurch gekennzeichnet, daß man Verbindungen der Formel II, worin

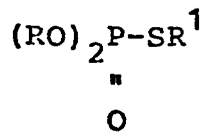

(II)

R und $R^1$ die obengenannten Bedeutungen besitzen, mit Phosphortrichlorid und Chlor umsetzt.

2. Verfahren gemäß Anspruch 1, dadurch gekennzeichnet, daß man die Reaktionspartner in äquimolaren Mengen einsetzt.

3. Verfahren gemäß Ansprüchen 1 und 2, dadurch gekennzeichnet, daß man die Reaktion in einem inerten Lösungsmittel durchführt.

4. Verfahren gemäß Ansprüchen 1 bis 3, dadurch gekennzeichnet, daß man die Reaktion in einem Temperaturbereich zwischen -20°C und dem Siedepunkt des Lösungsmittels ausführt.

5. Verfahren gemäß Ansprüchen 1 bis 4, dadurch gekennzeichnet, daß man die Reaktion in einem Temperaturbereich zwischen +10°C und +80°C durchführt.